# EUROPEAN PATENT APPLICATION

(11) **EP 3 016 401 A1**
(43) Date of publication of application: **04.05.2016**
(21) Application number: 14461586.1
(22) Date of filing: 30.10.2014
(51) Int. Cl.: H04N 21/81, H04N 13/00, H04S 7/00

(54) **A method and system for synchronizing playback of audio and video in a three-dimensional space**

(71) Applicant: Patents Factory Ltd. Sp. z o.o., 65-043 Zielona Gora (PL)
(72) Inventor: Paczkowski, Jacek, 65-043 Zielona Gora (PL); Nalewa, Tomasz, 65-043 Zielona Gora (PL); Kramek, Krzysztof, 65-043 Zielona Gora (PL)
(74) Representative: Eupatent.pl

(57) **Abstract**

A system for synchronizing playback of audio and video in a three-dimensional space, the system comprising: a three-dimensional audio input (101) configured to receive three-dimensional audio data comprising acoustic events specifying at least the time, position (*x, y, z)* and sample data of the acoustic event; a three-dimensional video input (102) configured to receive three-dimensional video data; a sound renderer (104) configured to process three-dimensional audio data; a video renderer (105) configured to process three-dimensional video data; and a video output (107) configured to display the processed three-dimensional video data on a display screen having predetermined parameters; characterized in that the system further comprises: a user position indicator (108) configured to provide position of the user with respect to the display screen; and a sound space transformer (103) configured to transform the original position of the acoustic event (*x, y*, *z*) to a transformed position (*x'*, *y'*, *z'*) based on the parameters of the display screen and the position of the user with respect to the display screen and to provide to the sound renderer (104) the audio data with transformed positions (*x'*; *y'* ; *z*') of the acoustic events.

## Description

### TECHNICAL FIELD

The present invention relates to synchronizing playback of audio and video in a three-dimensional space.

### BACKGROUND

Stereoscopic three-dimensional (3D) video technology has been recently subject to significant developments. Various methods have evolved to provide various ways of displaying of 3D content. However, there is still a lack of precise correspondence between the playback of the video signal and the playback of a corresponding audio signal. As a result, in current 3D video systems there may be discrepancies between the point at which a viewer perceives a sound-emitting object in a 3D scene and the point from which the sound actually originates from.

In currently user systems, such as Dolby (R) or DTS (Digital Theatre Systems), (R), data transmitted in the acoustic stream are abstract with relation to the visual data. The audio stream is sent to the speakers regardless of the position of the speakers, the size of the display screen or the position of the viewer with respect to the screen.

A US patent application US20120105603 discloses a display system with a video processor, an audio processor, a screen and a sound reproducing apparatus, wherein the video processor is configured to convert a 2D video signal into a 3D video signal and acquire a 3D computation power loading indicator which is associated with 3D video contents of the 3D video signal. The audio processor is configured to convert a 2D audio signal into a 3D audio signal according to a 3D positioning algorithm and the 3D computation power loading indicator. Images are displayed on the screen according to the 3D video signal. The sound reproducing apparatus is configured to generate dynamic 3D sound according to the 3D audio signal. Although the 3D video and audio signals are in a way synchronized, the synchronization is not precise, as it does not take into account the position of the user who perceives the audiovisual content.

There is therefore a need to provide a method and system for synchronizing playback of audio and video in a three-dimensional space, wherein the sound source points can be adapted depending on the viewer position.

### SUMMARY

There is presented a system for synchronizing playback of audio and video in a three-dimensional space, the system comprising: a three-dimensional audio input configured to receive three-dimensional audio data comprising acoustic events specifying at least the time, position (*x, y, z*) and sample data of the acoustic event; a three-dimensional video input configured to receive three-dimensional video data; a sound renderer configured to process three-dimensional audio data; a video renderer configured to process three-dimensional video data; and a video output configured to display the processed three-dimensional video data on a display screen having predetermined parameters; wherein the system further comprises: a user position indicator configured to provide position of the user with respect to the display screen; and a sound space transformer configured to transform the original position of the acoustic event (*x, y, z*) to a transformed position (*x', y', z*') based on the parameters of the display screen and the position of the user with respect to the display screen and to provide to the sound renderer the audio data with transformed positions (*x', y', z'*) of the acoustic events.

Preferably, the acoustic event further comprises orientation of the acoustic event, the orientation indicating the azimuth and elevation of the strongest emission of the event.

Preferably, the acoustic event further comprises characteristic of the acoustic event, the characteristic indicating at least the horizontal and vertical shape of acoustic emission.

Preferably, the acoustic event further comprises trajectory of the acoustic event, the trajectory indicating a fragmented line along which the sound source moves.

Preferably, the acoustic event further comprises at least one of: sampling rate and resolution of the acoustic event, in case they are different from the base sampling rate and resolution of the audio stream received from the audio input.

Preferably, the acoustic event comprises sample data as monophonic samples.

There is also presented a method for synchronizing playback of audio and video in a three-dimensional space, the method comprising: receiving, via a three-dimensional audio input, three-dimensional audio data comprising acoustic events specifying at least the time, position (*x, y, z*) and sample data of the acoustic event; receiving, via a three-dimensional video input, three-dimensional video data; processing the three-dimensional audio data in a sound renderer; processing the three-dimensional video data in a video renderer; displaying the processed three-dimensional video data on a display screen having predetermined parameters via a video output; wherein the method further comprises: receiving, via a user position indicator, a position of the user with respect to the display screen; transforming, in a sound space transformer, the original position of the acoustic event (*x, y, z*) to a transformed position (*x*', *y', z'*) based on the parameters of the display screen and the position of the user with respect to the display screen and providing to the sound renderer the audio data with transformed positions (*x', y', z*') of the acoustic events.

There is also presented a computer program comprising program code means for performing all the steps of the computer-implemented method as described above when said program is run on a computer, as well as a computer readable medium storing computer-executable instructions performing all the steps of the computer-implemented method as described above when executed on a computer.

### BRIEF DESCRIPTION OF FIGURES

The method and system for synchronizing playback of audio and video in a three-dimensional space are shown by means of example embodiments on a drawing, in which:

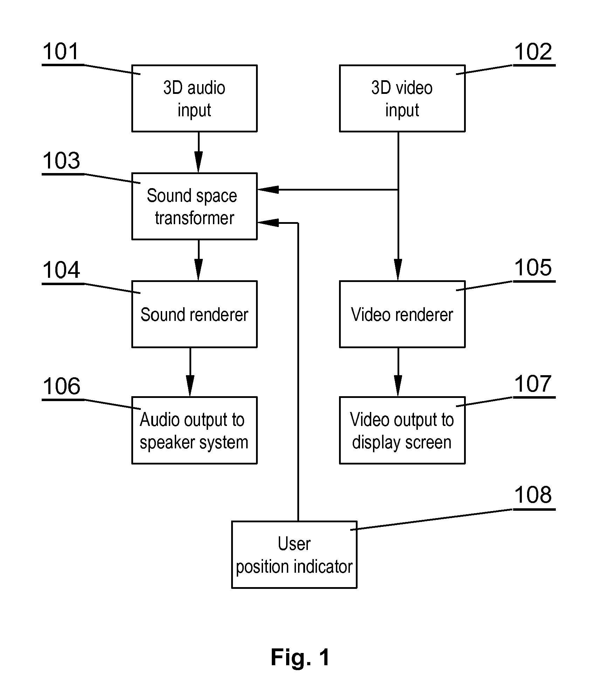

Fig. 1 shows the structure of the system;

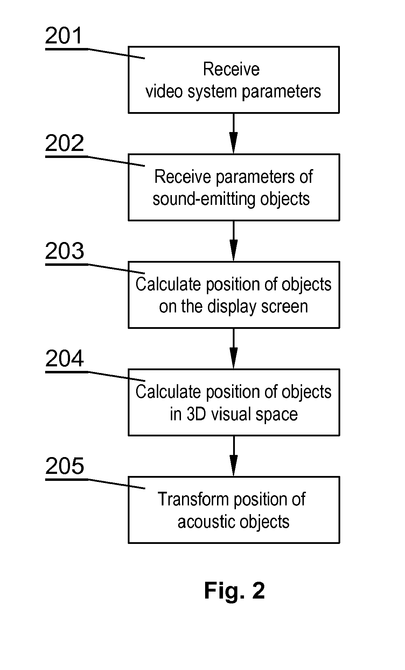

Fig. 2 shows the steps of the method;
Fig. 3 shows equations used in the system and method.

### DETAILED DESCRIPTION

In the presented method and system, the acoustic stream received from a 3D audio input 101 can be composed of acoustic events occurring in a three-dimensional space. An acoustic event is understood as appearance of a sound source in a particular position of the acoustic space. Each event can be represented by at least some of the following set of parameters:
- the moment (time) of appearance of the sound;
- position of the sound source with respect to a reference point;
- orientation of the sound source, i.e. the direction along which the highest amplitude of sound is generated;
- spatial characteristic of the sound source, i.e. the shape of sound amplitude curve with respect to the emission angle - a zero angle may indicate emission in the direction of the highest amplitude;
- trajectory of sound source movement in the space, for example when the sound source is a moving vehicle or a walking person;
- sampling frequency, if it is different than the base sampling frequency of the stream;
- signal resolution, i.e. the number of bits per sample - this parameter may be present when the source has a different resolution than the base resolution for the stream;
- a set of acoustic samples - the samples can be monophonic and can be present when the sound is emitted from the particular source.

In one embodiment, the acoustic event packet may comprise the following fields:
- time (*T*) *-* indicates the start time of the event;
- position (*x₀,y₀,z₀*) *-* indicates the start position, for example as Cartesian coordinates;
- orientation (γ*₀,δ₀*) *-* indicates the azimuth and elevation, indicating the direction of the strongest emission, wherein the zero direction can be a direction towards the centre of the coordinates system;
- spatial characteristic of emission (*s,λᵢ,uᵢ,vᵢ*) *-* indicates the normalized characteristic of acoustic emission, typically in a form of a closed curve describing the emission strength with respect to the angle of emission, wherein:
   o *uᵢ* describes the horizontal shape;
   ∘ *vᵢ* describes the vertical shape;
   o *i* is from 0 to s, wherein s is the amount of segments of a segmented line describing the emission;
   ∘ λᵢ describes an angle, wherein when the range is described from zero to 180° only then the characteristic is symmetric and the table describes only a half of the characteristic;
- trajectory (*n,xᵢ,yᵢ,zᵢ,γᵢ,δᵢ*) *-* indicates the fragmented line along which the sound source moves, having n fragments; *xᵢ,yᵢ,zᵢ* indicate the starting points of each fragment, *γᵢ*,*δᵢ* indicate the angular coefficients describing the orientation of the object;
- sampling_rate (*fᵣ*) - indicates the sampling frequency - it may be specified in case it is different from the base sampling frequency of the stream;
- resolution (*k*) - indicates the number of bits per sample - it may be specified in case it is different from the base resolution for the whole stream;
- language (*lan*) *-* it may indicate the language of the sample, for example by the following values: 0 - the sample is a non-verbal sample; 1 - English, 2 - German, etc.
- sample data (*m*, *dᵢ*) - monophonic samples of the sound, wherein *i* is from 0 to *m*. *m* determines the number of samples, which depends on the time of emission of the acoustic event and its sampling frequency. For example, emission having a length of 2s and 41 kHz sampling frequency may comprise 82000 monophonic samples.

For example, when the sound source is related to a person who is speaking, the source will appear in the stream upon the beginning of a spoken word and disappear when the utterance of the word is finished. When the sound is generated by an orchestra, different instruments may be associated with different sound sources. The construction of the acoustic stream, which takes into account the position of individual sound-generating objects in the space, allows to manipulate the sound space before rendering of the audiovisual scene, which allows to adjust the acoustic space to the visual space perceived by the user.

An important feature of the presented method and system is the local rendering of sound. The local sound renderer 104 receives all component sounds (samples) and composes acoustic streams sent to individual speakers. Preferably, rendering is performed individually for each speaker. The samples have associated information about position of the sound source with respect to a reference point, which is assumed as the point at which the head of the user is positioned. The position of the head is provided by a user position indicator 108. The audio stream is pre-processed by a sound space transformer 103 (the operation of which will be explained in details below) and processed by the renderer 104, taking into account information related to the reference point location, location of speakers, acoustic characteristics of the speakers and the acoustic characteristic of the environment in which the system is located (for example a room), such as to use the local resources effectively. In particular, the renderer 104 may use the ability of walls and objects in the environment to reflect the sounds and generate virtual speakers to emit sound from various directions and to effectively position the sound sources in the space surrounding the user (listener). The sound space transformer 103 is also able to adapt (correct) the position of sound sources in the space. For example, while watching a 3D video, the acoustic space may be adapted to the visual space. In another example, when the audiovisual recording is related to an orchestra concert, the virtual space size can be adjusted to meet the expectations of the user.

The reference point (i.e. the zero point of the coordinates system) for the acoustic space shall be the point at which the head of the user is located. The structure of the acoustic event packet described above comprises information about the position of the sound-emitting object in the space. The position can be expressed by Cartesian, cylindrical or spherical coordinates. Regardless of the coordinate system, position data may be modified for example by scaling (which may be different for different axes), rotating and displacing. As an effect, one acoustic space (i.e. the original acoustic space of the input audio stream) may be converted to another acoustic space (i.e. the acoustic space corresponding to the situation in which the viewer watches the audiovisual data).

In order to match the acoustic space of the 3D audio stream from input 101 and the visual space of the 3D video stream from input 102, the following parameters shall be determined:
- size of the display screen;
- resolution of the display screen;
- resolution of the video stream;
- position of the user with respect to the display screen.

In order to synchronize audio with video, the position of sound-emitting video objects on the display screen should be known.

In one embodiment, this can be determined as follows. Each object, which is outside the plane of the display screen shall be described by a left and right representation, i.e. representation to be perceived by the left and right eye, respectively. The position of the objects can be calculated on the basis of the left and right representation of the object on the screen, but it is typically unknown, which representation, i.e. left or right, emits the sound. This can be determined on the basis of data about position of sound-emitting objects in the acoustic stream. Geometrical relationships between the position of sound-emitting objects are generally corresponding to the geometrical relationships between the position of at least part of objects visible on the image. By comparison, the visual objects can be matched to the acoustic objects.

In alternative embodiment, information about the sound-emitting objects can be attached to video frames in the visual data stream. For example, each object can be represented by a left horizontal coordinate *(xlₙ),* right horizontal coordinate (*xrₙ*) and a vertical coordinate (*yₙ*), the coordinates being expressed for example in pixels. The left horizontal coordinate determines the object perceived by the left eye and the right horizontal coordinate determines the object perceived by the right eye. This data can be attached to each video frame or only to one of a set of frames. Since the data are attached to the video frames as auxiliary data, the video frames can be processed both by standard decoders (which then disregard these data) and by decoders capable of handling the method presented herein.

The position of the object can be determined as described with reference to the following example.

The audiovisual system may have the following parameters (received at step 201 of the procedure):
- display screen size: 60" = 1,524 m;
- screen resolution: 1920x1080 pixels (1.328x0.747 m);
- video stream resolution: 1920x1080 - stereoscopic, side-by-side;
- position of the user's head: *xᵥ =* -0.2m, *yᵥ* = 0.2 m, *zᵥ* = 3 m (i.e. the head is 3m away from the screen, 0,2m to the left and 0,2m above the display screen).

There may be the following sound-emitting objects on the screen: (the coordinates specify the centres of the objects on the display screen in pixels, wherein the zero point (0,0) corresponds to the bottom left corner of the screen)
O₁: *xl₁* = 156, *xr₁* = 222, *y₁* = 730
O₂: *xl₂* = 984, *xr₁ =* 1008, *y₂* = 423
O₃: *xl₃* = 1846, *xr₃* = 1831, *y*₃ = 678

The parameters of the sound-emitting objects are received in step 202 of the procedure.

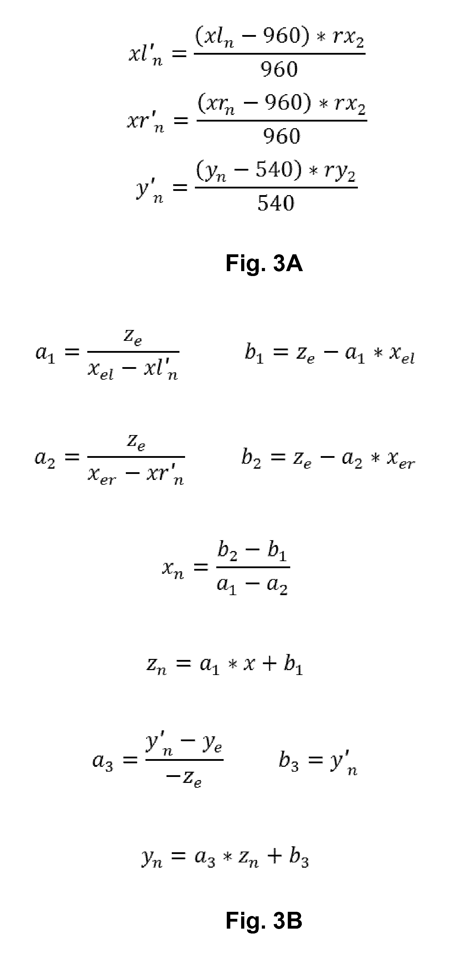

Position of the objects on the screen in meters can be calculated using the equations shown in Fig. 3A in step 203, wherein:
*rx* = 1,328 m (60" screen width), *rx₂* = 0.664 m (half of 60" screen width);
*ry* = 0.747 m (60" screen height), *ry₂ =* 0.374 m (half of 60" screen height);
960 is half of the screen resolution in the x axis;
540 is half of the screen resolution in the y axis.

By using the equations of Fig. 3A, the following results are obtained:
O₁: *xl'₁ =* -0.556 m, *xr'₁* = -0.511 m, *y'₁* = 0.131 m
O₂*: xl'₂ =* 0.017 m*, xr'₂ =* 0.033 m*, y'₂* = -0.081 m
O₃: *xl'₃* = 0.613 m, *xr'₃* = 0.603 *m, y'₃* = 0.095 m

If the eyes of the user are at position *xᵥ* = -0.2 m, *yᵥ* = 0.2 m, *zᵥ* = 3m, and the distance between the eyes is 0.068 m, then the position of the eyes is:
Left eye: *xₑ₁ =* -0.234 m, *yₑ* = 0.2 m, *zₑ* = 3 m
Right eye: *xₑᵣ* = -0.166 m, *yₑ* = 0.2 m, *zₑ* = 3m

The position of objects perceived in the 3D visual space can be calculated using the equations of Fig. 3B in step 204.

As a result, the following transformed data can be calculated:
O₁: *x₁* = -1.215 m, *z₁ =* -6.131 m, *y1* = -0.009 m
O₂: *x₂* = 0.098 m, *z*₂ = -0.969 m, *y2 =* -0.172 m
O₃: *x₃* = 0.501 m, *z₃* = 0.397 m, *y3* = 0.109 m

The positions of objects are indicated with respect to the reference point which is the middle of the display screen. A positive value of z indicates that the object is positioned "in front" of the screen, and a negative value of *z* indicates that the object is positioned "behind" the screen.

The above calculations determine the position of objects in the visual space perceived by the user. It shall be noted that the position of visual objects depends on the position of the user's head. When the head is moved, the virtual objects are shifted. For this reason, the acoustic space shall be changed as well and adapted to the visual space, according to the position of the user with respect to the display screen.

Therefore, the objects of the visual space and the objects of the acoustic space shall be coherent.

The following shall be noted:
For the visual space:
   - zero point (x=0, y=0, z=0) - at the middle of the display screen;
   - versor x - parallel to the horizontal axis of the display screen;
   - versor y - parallel to the vertical axis of the display screen;
   - versor z - perpendicular to the plane of the display screen.
For the acoustic space:
   - zero point (x=0, y=0, z=0) - at the middle of the user's head;
   - versor x - parallel to the line of the eyes;
   - versor y - perpendicular to the line of the eyes and parallel to the vertical axis of the head;
   - versor z - parallel to x and y and oriented along the direction of look by the user.

The zero point of the acoustic space is at a different position than the zero point of the visual space. Moreover, the sound-emitting objects can be at different distances from each other as compared to the same objects in the visual space. It is therefore necessary to transform the acoustic space such that the sound-emitting objects are at the points at which they are perceived by the viewer. The transformation shall be based on scaling, wherein the scaling can be different for different axes, shift and rotation of the coordinate system. There are nine parameters to be calculated to effect the transformation:
- scaling coefficients *kₓ, k_{y}* and *k_{z}*
- shift vectors *Δx*, *Δy* and *Δz*,
- rotation angles *α, β* and *γ.*

In order to determine the values of all transformation coefficients, at least nine objects shall be taken into account, for which the position in both the visual and acoustic three-dimensional spaces is known. Having these data, the set of corresponding equations can be solved to calculate the transformation coefficients.

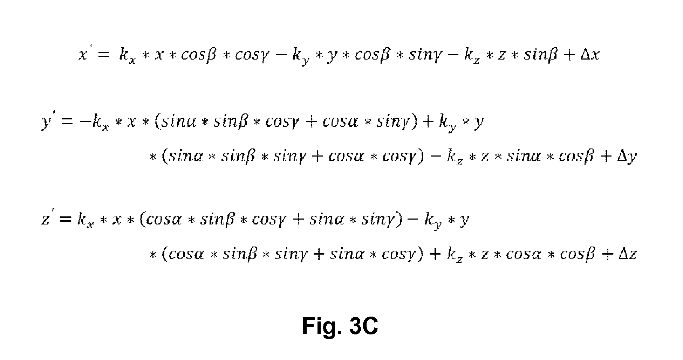

When the transformation coefficients are known, it is possible to transform, in step 205, the position of the acoustic objects in the acoustic space by the sound space transformer 103 using the equations shown in Fig. 3C to obtain transformed acoustic event position (*x', y', z'*)*.* The values *x', y', z'* shall replace the original position (*x,y,z*) in the acoustic stream, as well as the coordinates of the trajectory, and the modified stream shall be input to the sound renderer 104.

The presented method allows to synchronize the acoustic and visual space perceived by the user. This is achieved by certain transformation of information related to position of objects in the acoustic stream. As a result, the user perceives coherent audio and video information about objects.

It can be easily recognized, by one skilled in the art, that the aforementioned method for synchronizing playback of audio and video in a three-dimensional space may be performed and/or controlled by one or more computer programs. Such computer programs are typically executed by utilizing the computing resources in a computing device such as personal computers, personal digital assistants, cellular telephones, dedicated controllers or the like. Applications are stored on a non-transitory medium. An example of a non-transitory medium is a non-volatile memory, for example a flash memory or volatile memory, for example RAM. The computer instructions are executed by a suitable processor. These memories are exemplary recording media for storing computer programs comprising computer-executable instructions performing all the steps of the computer-implemented method according the technical concept presented herein.

The present invention related to processing of audio and video data in order to synchronize location of audio and video objects. Therefore, the invention provides a useful, concrete and tangible result. The aforementioned processing takes place in special systems which utilize hardware resources. Therefore the machine or transformation test is fulfilled and the idea is not abstract.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A system for synchronizing playback of audio and video in a three-dimensional space, the system comprising:
- a three-dimensional audio input (101) configured to receive three-dimensional audio data comprising acoustic events specifying at least the time, position (*x, y, z*) and sample data of the acoustic event;
- a three-dimensional video input (102) configured to receive three-dimensional video data;
- a sound renderer (104) configured to process three-dimensional audio data;
- a video renderer (105) configured to process three-dimensional video data;
and
- a video output (107) configured to display the processed three-dimensional
video data on a display screen having predetermined parameters;
**characterized in that** the system further comprises:
- a user position indicator (108) configured to provide position of the user with respect to the display screen; and
- a sound space transformer (103) configured to transform the original position of the acoustic event (*x, y, z*) to a transformed position (*x', y', z*') based on the parameters of the display screen and the position of the user with respect to the display screen and to provide to the sound renderer (104) the audio data with transformed positions (*x', y', z'*) of the acoustic events.

2. The system according to claim 1, wherein the acoustic event further comprises orientation of the acoustic event, the orientation indicating the azimuth and elevation of the strongest emission of the event.

3. The system according to claim 1, wherein the acoustic event further comprises characteristic of the acoustic event, the characteristic indicating at least the horizontal and vertical shape of acoustic emission.

4. The system according to claim 1, wherein the acoustic event further comprises trajectory of the acoustic event, the trajectory indicating a fragmented line along which the sound source moves.

5. The system according to claim 1, wherein the acoustic event further comprises at least one of: sampling rate and resolution of the acoustic event, in case they are different from the base sampling rate and resolution of the audio stream received from the audio input (101).

6. The system according to claim 1, wherein the acoustic event comprises sample data as monophonic samples.

7. A method for synchronizing playback of audio and video in a three-dimensional space, the method comprising:
- receiving, via a three-dimensional audio input (101), three-dimensional audio data comprising acoustic events specifying at least the time, position (*x, y, z*) and sample data of the acoustic event;
- receiving, via a three-dimensional video input (102), three-dimensional video data;
- processing the three-dimensional audio data in a sound renderer (104);
- processing the three-dimensional video data in a video renderer (105);
- displaying the processed three-dimensional video data on a display screen having predetermined parameters via a video output (107);
**characterized in that** the method further comprises:
- receiving, via a user position indicator (108), a position of the user with respect to the display screen;
- transforming, in a sound space transformer (103), the original position of the acoustic event (*x, y, z*) to a transformed position (*x', y', z'*) based on the parameters of the display screen and the position of the user with respect to the display screen and providing to the sound renderer (104) the audio data with transformed positions (*x', y', z'*) of the acoustic events.

8. A computer program comprising program code means for performing all the steps of the computer-implemented method according claim 7 when said program is run on a computer.

9. A computer readable medium storing computer-executable instructions performing all the steps of the computer-implemented method according claim 7 when executed on a computer.

## Amended claims

### Amended claims in accordance with Rule 137(2) EPC.

1. A system for synchronizing playback of audio and video in a three-dimensional space, the system comprising:
- a three-dimensional audio input (101) configured to receive three-dimensional audio data comprising acoustic events specifying at least the time, position (*x, y, z*) and sample data of the acoustic event;
- a three-dimensional video input (102) configured to receive three-dimensional video data;
- a sound renderer (104) configured to process three-dimensional audio data;
- a video renderer (105) configured to process three-dimensional video data; and
- a video output (107) configured to display the processed three-dimensional video data on a display screen having predetermined parameters;
**characterized in that** the system further comprises:
- a user position indicator (108) configured to provide a three-dimensional position of the user with respect to the display screen; and
- a sound space transformer (103) configured to transform the original position of the acoustic event (*x,* y*, z*) to a transformed position (*x', y', z'*) based on the parameters of the display screen, location of speakers and the three-dimensional position of the user with respect to the display screen and to provide to the sound renderer (104) the audio data with transformed positions (*x', y', z'*) of the acoustic events.

2. The system according to claim 1, wherein the acoustic event further comprises orientation of the acoustic event, the orientation indicating the azimuth and elevation of the strongest emission of the event.

3. The system according to claim 1, wherein the acoustic event further comprises characteristic of the acoustic event, the characteristic indicating at least the horizontal and vertical shape of acoustic emission.

4. The system according to claim 1, wherein the acoustic event further comprises trajectory of the acoustic event, the trajectory indicating a fragmented line along which the sound source moves.

5. The system according to claim 1, wherein the acoustic event further comprises at least one of: sampling rate and resolution of the acoustic event, in case they are different from the base sampling rate and resolution of the audio stream received from the audio input (101).

6. The system according to claim 1, wherein the acoustic event comprises sample data as monophonic samples.

7. A method for synchronizing playback of audio and video in a three-dimensional space, the method comprising:
- receiving, via a three-dimensional audio input (101), three-dimensional audio data comprising acoustic events specifying at least the time, position (*x, y, z*) and sample data of the acoustic event;
- receiving, via a three-dimensional video input (102), three-dimensional video data;
- processing the three-dimensional audio data in a sound renderer (104);
- processing the three-dimensional video data in a video renderer (105);
- displaying the processed three-dimensional video data on a display screen having predetermined parameters via a video output (107);
**characterized in that** the method further comprises:
- receiving, via a user position indicator (108), a three-dimensional position of the user with respect to the display screen;
- transforming, in a sound space transformer (103), the original position of the acoustic event (*x, y, z*) to a transformed position (*x', y', z'*) based on the parameters of the display screen, location of speakers and the three-dimensional position of the user with respect to the display screen and providing to the sound renderer (104) the audio data with transformed positions (*x, y'*, *z'*) of the acoustic events.

8. A computer program comprising program code means for performing all the steps of the computer-implemented method according claim 7 when said program is run on a computer.

9. A computer readable medium storing computer-executable instructions performing all the steps of the computer-implemented method according claim 7 when executed on a computer.
